# EUROPEAN PATENT SPECIFICATION

(11) **EP 4 130 502 B1**
(45) Date of publication and mention of the grant of the patent: **28.01.2026**
(21) Application number: 20932263.5
(22) Date of filing: 21.04.2020
(51) Int. Cl.: F16D 1/05, F16D 1/02, F16D 1/10, F16D 1/00, H02K 7/00, H02K 7/10, B60K 17/06, B60K 1/00

(54) **POWER ASSEMBLY AND VEHICLE**
ANTRIEBSANORDNUNG UND FAHRZEUG
ENSEMBLE D'ALIMENTATION ET VÉHICULE

(43) Date of publication of application: 08.02.2023
(60) Divisional application: 25224208.6
(73) Proprietor: Huawei Digital Power Technologies Co., Ltd., Shenzhen, Guangdong 518043 (CN)
(72) Inventor: HONG, Jian, Shenzhen, Guangdong 518129 (CN); ZHANG, Xiaohan, Shenzhen, Guangdong 518129 (CN); CHEN, Xiaoguo, Shenzhen, Guangdong 518129 (CN)
(74) Representative: Goddar, Heinz J.
(86) International application number: PCT/CN2020/085974
(87) International publication number: WO 2021/212338

(56) References cited:
- EP-A1- 3 292 315
- EP-B1- 3 292 315
- WO-A1-2016/177550
- CN-A- 107 636 333
- CN-A- 108 944 394
- GB-A- 2 393 493
- JP-A- 2015 140 857
- JP-B2- 5 671 829
- US-A1- 2018 179 895

## Description

### TECHNICAL FIELD

This invention relates to the field of power driving technologies, and in particular, to a power assembly and a vehicle.

### BACKGROUND

In some power driving systems, rotating force needs to be transmitted through docking between rotating shafts. For example, in a power driving system including a motor and a retarder, an output shaft of the motor needs to be docked with an input shaft of the retarder, to transmit rotating force generated by the output shaft of the motor to the input shaft of the retarder. In a conventional configuration structure, the output shaft of the motor is installed on a housing of the motor by using two bearings, the input shaft of the retarder is installed on a housing of the retarder by using two other bearings, and the output shaft of the motor is coupled to the input shaft of the retarder by using a structure such as a spline. However, in a manufacturing and assembly process, to ensure stability of transmission of rotation force, it is required to ensure that axis centers of the four bearings are located on a same axis, and it is also required to ensure that an axis center of the output shaft of the motor and an axis center of the input shaft of the retarder are located on a same axis. Therefore, a requirement for processing precision of the output shaft of the motor and the input shaft of the retarder is relatively high, and a requirement for precision of positioning between the four bearings is also relatively high. Consequently, it is difficult to ensure concentricity between splines. During rotation, the output shaft of the motor and the input shaft of the retarder are prone to generate adverse problems such as vibration. In addition, use of the four bearings results in a relatively large quantity of parts and a complex assembly process, which is not beneficial to development of a power assembly in integration and compactness.

WO 2016/177550 A1 discloses an electromechanical assembly comprising an electrical machine coupled to a reduction gear, said electrical machine comprising a single bearing at the rear. Either the electrical machine or the reduction gear is equipped with a male shaft, while the other is equipped with a female shaft mounted on the male shaft. In addition, the shafts have conical bearing surfaces, and the assembly comprises an elastically deformable element that biases the bearing surfaces axially relative to one another until they engage with one another. JP 2015-140857 A discloses an in-wheel motor drive device including a casing holding a motor part, a speed reduction part, and a wheel bearing part. The motor part includes: a stator fixed to the casing; a motor rotational shaft rotatably supported to the casing through rolling bearings; and a rotor mounted to the motor rotational shaft. The rolling bearing is configured such that a radial inside gap δ before assembly to the motor part is set to 8-25 µm. EP 3 292 315 A1 discloses an electromechanical assembly comprising an electrical machine coupled to a reducer, either the electrical machine or the reducer comprising a male shaft and the other one comprising a female shaft into which the male shaft is inserted, the transmission of the torque between the two being ensured by form-fitting, the shaft of the electrical machine being supported at the rear by a bearing, and an elastically deformable damping element being arranged in the female shaft so as to exert an axial force on the portion of the male shaft engaged in the female shaft, said axial force tending to apply an axial load to said rear bearing.

### SUMMARY

This invention provides a power assembly of claim 1 and a vehicle of claim 7 that have a simple structure, run stably, and have a relatively low requirement for processing precision and assembly precision. Further embodiments are disclosed in the dependent claims.

According to an aspect, an embodiment of this application provides a power assembly, including a housing, and a first rotating shaft and a second rotating shaft that are disposed in the housing. The first rotating shaft has a first end and a second end, where the first end is located in the housing by using a first bearing, and the second end is located in the housing by using a second bearing. The second rotating shaft is coaxially disposed with the first rotating shaft. The second rotating shaft has a third end and a fourth end, where the third end is located in the housing by using a third bearing, and the third bearing is capable of sliding relative to the housing in an axial direction. To implement that the first rotating shaft and the second rotating shaft rotate synchronously, a first coupling portion is disposed at the second end of the first rotating shaft, a second coupling portion is disposed at the fourth end of the second rotating shaft, and the first coupling portion is coupled to the second coupling portion, so that the first rotating shaft and the second rotating shaft rotate synchronously. In addition, to ensure concentricity between the first coupling portion and the second coupling portion, a first concentric surface is disposed on the first rotating shaft, the first concentric surface is disposed oblique to an axis center of the first rotating shaft, and a distance between the first concentric surface and the axis center of the first rotating shaft gradually increases in a first axial direction. A second concentric surface is disposed on the second rotating shaft, the second concentric surface is disposed oblique to an axis center of the second rotating shaft, and a distance between the second concentric surface and the axis center of the second rotating shaft gradually increases in the first axial direction. When the power assembly is in a working state (for example, when the power assembly is not subjected to external vibration, impact, and the like), the first concentric surface abuts against the second concentric surface, to prevent the first rotating shaft and the second rotating shaft from moving relative to each other in a radial direction, thereby ensuring concentricity between the first coupling portion and the second coupling portion.

In addition, to enable the first concentric surface to tightly abut against the second concentric surface, a preloaded part may be further disposed in the power assembly. The preloaded part is connected to the housing and the third bearing, and is configured to apply acting force to the second rotating shaft in a second axial direction (opposite to the first axial direction) by using the third bearing, so that the first concentric surface abuts against the second concentric surface, thereby effectively ensuring that the first coupling portion and the second coupling portion have good concentricity.

In specific implementation, the first concentric surface and the second concentric surface may have varied shape structures.

For example, the first concentric surface may be a structure of a conical oblique surface, a conical convex surface, or a conical concave surface using the axis center of the first rotating shaft as a rotation center. Correspondingly, the second concentric surface may also be a structure of a conical oblique surface, a conical convex surface, or a conical concave surface using the axis center of the second rotating shaft as a rotation center.

According to the present invention, a docking hole may be disposed on an end surface of the second end of the first rotating shaft, and a docking post may be disposed at the fourth end of the second rotating shaft. After the docking post is inserted into the docking hole, coupling between the first rotating shaft and the second rotating shaft can be implemented, and coaxiality between the first rotating shaft and the second rotating shaft can also be ensured.

According to the invention, the first concentric surface may be disposed on the inner wall of the docking hole. Correspondingly, the second concentric surface may be disposed on the outer circumferential surface of the docking post. The docking post is inserted into the docking hole, so that the first concentric surface can abut against the second concentric surface. Therefore, concentricity between the first coupling portion and the second coupling portion can be ensured, or coaxiality between the first rotating shaft and the second rotating shaft can be ensured, thereby preventing the first rotating shaft and the second rotating shaft from generating displacement relative to each other in a radial direction, to avoid the first rotating shaft and the second rotating shaft from generating vibration (or radial runout) during rotation. In addition, this further helps to reduce processing precision and assembly precision of the first coupling portion and the second coupling portion.

In addition, in some other implementations, when the power assembly or the second rotating shaft is subjected to external force or vibration, the second rotating shaft may move in the second axial direction. As a result, the first concentric surface is separated from the second concentric surface, and concentricity between the first coupling portion and the second coupling portion cannot be ensured. To resolve this, in some implementations, concentricity between the first coupling portion and the second coupling portion may be ensured by using an auxiliary junction surface.

According to the invention, a cylindrical first auxiliary junction surface is disposed on the inner wall of the docking hole, and a cylindrical second auxiliary junction surface may be disposed on the outer circumferential surface of the docking post, where the first auxiliary junction surface is in a clearance fit with the second auxiliary junction surface. When the second rotating shaft slides in the axial direction, the first auxiliary junction surface and the second auxiliary junction surface always maintain the clearance fit, so that when the first concentric surface and the second concentric surface are separated from each other, the clearance fit between the first auxiliary junction surface and the second auxiliary junction surface can still ensure concentricity between the first coupling portion and the second coupling portion, thereby improving stability and reliability of the power assembly during running.

The docking hole is disposed on the first rotating shaft, and the docking post is disposed on the second rotating shaft, to implement coupling between the first rotating shaft and the second rotating shaft, and ensure coaxiality between the first rotating shaft and the second rotating shaft.

After the docking post is inserted into the docking hole, coupling between the first rotating shaft and the second rotating shaft can be implemented, and coaxiality between the first rotating shaft and the second rotating shaft can also be ensured.

In addition, in some other implementations, when the power assembly or the second rotating shaft is subjected to external force or vibration, the second rotating shaft may move in the second axial direction. As a result, the first concentric surface is separated from the second concentric surface, and concentricity between the first coupling portion and the second coupling portion cannot be ensured. To resolve this, in some implementations, concentricity between the first coupling portion and the second coupling portion may be ensured by using an auxiliary junction surface.

According to the invention, a cylindrical second auxiliary junction surface is disposed on the inner wall of the docking hole, and a cylindrical first auxiliary junction surface may be disposed on the outer circumferential surface of the docking post, where the first auxiliary junction surface is in a clearance fit with the second auxiliary junction surface. When the second rotating shaft slides in the axial direction, the first auxiliary junction surface and the second auxiliary junction surface always maintain the clearance fit, so that when the first concentric surface and the second concentric surface are separated from each other, the clearance fit between the first auxiliary junction surface and the second auxiliary junction surface can still ensure concentricity between the first coupling portion and the second coupling portion, thereby improving stability and reliability of the power assembly during running.

In addition, the first concentric surface and the second concentric surface are tightly attached to each other because the preloaded part applies elastic force, that is, the preloaded part applies acting force to the third bearing (the second rotating shaft) in the second axial direction, so that the second rotating shaft and the third bearing slide towards the second axial direction, to enable the first concentric surface to tightly abut against the second concentric surface. After being affected by external vibration and the like, the second rotating shaft slides towards the first axial direction. When the second rotating shaft slides in the first axial direction, the preloaded part generates elastic deformation. Therefore, to prevent the preloaded part from generating excessive deformation to be failed, a limit surface may be disposed in the housing. After the second rotating shaft and the third bearing slide towards the first axial direction by a specific distance, the limit surface abuts against the third bearing, thereby preventing the second rotating shaft and the third bearing from continuing to slide towards the first axial direction, to effectively prevent the preloaded part from generating excessive deformation, to avoid a failure of the preloaded part.

In addition, in some other implementations, the power assembly may further include a retarder and a motor. Specifically, the first rotating shaft may be used as an input shaft of the retarder, and the outer circumferential surface of the second rotating shaft may be installed with a gear or directly molded into a structure of the gear. A first housing may be used as a housing of the retarder, and parts such as the gear in the retarder may be disposed in the first housing. The second rotating shaft may be used as a rotor shaft of the motor, a rotor may be disposed on the second rotating shaft, and a stator may be disposed in a third housing. A second housing may be used as an auxiliary part configured to be fixedly connected to the housing (the first housing) of the retarder and a housing (the third housing) of the motor, thereby effectively improving integrity of the power assembly.

In practical application, the power assembly may be installed in fields such as a vehicle, a ship, and an unmanned aerial vehicle. For example, in a vehicle, the power assembly may be coupled to a wheel in the vehicle, thereby driving the wheel to rotate, to implement a driving function of the vehicle. In specific implementation, the vehicle may be a passenger vehicle, a robotic vehicle, and the like. This is not specifically limited in this application.

### BRIEF DESCRIPTION OF DRAWINGS

FIG. 1 is a schematic diagram of a cross-section structure of a power assembly according to an embodiment of this application;
FIG. 2 is a schematic diagram of a partial cross-section structure of a power assembly according to an embodiment of this application;
FIG. 3 is an exploded view of a partial structure of a power assembly according to an embodiment of this application;
FIG. 4 is a schematic diagram of a cross-section structure of a partial structure of a power assembly according to an embodiment of this application;
FIG. 5 is a schematic diagram of a partial cross-section structure of a power assembly according to an embodiment of this application;
FIG. 6 is a schematic diagram of a partial cross-section structure of a first rotating shaft according to an embodiment of this application;
FIG. 7 is a schematic diagram of a partial cross-section structure of another first rotating shaft according to an embodiment of this application;
FIG. 8 is a schematic diagram of a partial cross-section structure of a second rotating shaft according to an embodiment of this application;
FIG. 9 is a schematic diagram of a partial cross-section structure of another second rotating shaft according to an embodiment of this application;
FIG. 10 is a schematic diagram of a cross-section structure of a power assembly according to an embodiment of this application;
FIG. 11 is a schematic diagram of a cross-section structure of a partial structure of a power assembly according to an example helpful for understanding the invention; and
FIG. 12 is a schematic diagram of a cross-section structure of another power assembly according to an embodiment of this application.

### DESCRIPTION OF EMBODIMENTS

To make objectives, technical solutions, and advantages of this application clearer, the following further describes this application in detail with reference to the accompanying drawings.

To facilitate understanding of a power assembly provided in the embodiments of this application, an application scenario of the power assembly is described first below.

The power assembly provided in the embodiments of this application may be applied to fields such as a vehicle, a ship, and an unmanned aerial vehicle. The power assembly may be used as an intermediate structure for power transmission, to meet a requirement of power transmission between a power source and a load. Specifically, the power assembly may include an output shaft and an input shaft that are coupled by using a coupling structure (such as a spline), and rotating torque generated by the output shaft can be transmitted to the input shaft by using the coupling structure, so that the input shaft can rotate synchronously with the output shaft. Alternatively, the power assembly may also include a power source. Specifically, the power assembly may include a motor (the motor may be used as a power source) and a retarder, and a rotor shaft of the motor may be used as an output shaft. An input shaft is disposed in the retarder. The input shaft of the retarder may be coupled to an output shaft of the motor by using a coupling structure (such as a spline), and an output shaft of the retarder may be coupled to a load. Therefore, the output shaft of the motor may transmit power to the load by using the retarder, so that the load can complete a corresponding action. For example, in a vehicle, the load may be a wheel in the vehicle. In a ship, the load may be a propeller in the ship. In an unmanned aerial vehicle field, the load may be a rotor wing.

An example in which the power assembly includes the foregoing motor and retarder is used. In practical application, the output shaft of the motor may be located in a housing of the motor by using a bearing (such as a rolling bearing), to prevent the output shaft from generating displacement relative to the housing in axial and radial directions. The input shaft of the retarder may be located in a housing of the retarder by using a bearing (such as a rolling bearing), to prevent the input shaft from generating displacement relative to the housing in axial and radial directions. In addition, to ensure driving stationarity of the power assembly, the output shaft of the motor may be located in the housing by using two bearings, and the two bearings may be respectively disposed at two ends of the output shaft, to prevent the output shaft from generating locational deviation and radial runout during rotation. Correspondingly, the input shaft of the retarder may also be located in the housing by using two bearings, and the two bearings may be respectively disposed at two ends of the input shaft, to prevent the input shaft from generating locational deviation and radial runout during rotation. When the input shaft is coupled to the output shaft, a spline structure may be disposed on the input shaft and a spline structure may be disposed on the output shaft. When the two spline structures cooperate with each other, concentricity between the two spline structures needs to be ensured. Therefore, a requirement for processing precision and assembly precision is relatively high. In addition, because both the output shaft and the output shaft are located by using two bearings, a relatively large quantity of bearings are used, which increases manufacturing costs and a weight of the power assembly, and is not beneficial to design of the power assembly in simplification and integration. In addition, assembly difficulty and complexity are also increased.

Based on the problem existing in the foregoing power assembly, this application provides a power assembly that has a simple structure, runs stably, and has a relatively low requirement for processing precision and assembly precision.

To facilitate understanding of technical solutions of this application, the following specifically describes the power assembly provided in this application with reference to the accompanying drawings and specific implementations.

Terms used in the following embodiments are merely intended to describe specific embodiments, but are not intended to limit this application. Terms "one", "a", "the", "the foregoing", "this", and "the one" of singular forms used in this specification and the appended claims of this application are also intended to include plural forms like "one or more", unless otherwise specified in the context clearly. It should be further understood that, in the following embodiments of this application, "at least one" or "one or more" means one, two, or more. The term "and/or" is used to describe an association relationship between associated objects, and indicates that three relationships may exist. For example, A and/or B may indicate cases in which only A exists, both A and B exist, and only B exists, where A and B may be singular or plural. The character "/" usually indicates an "or" relationship between the associated objects.

Reference to "an embodiment", "some embodiments", or the like described in this specification indicates that one or more embodiments of this application include a specific feature, structure, or characteristic described with reference to the embodiments. Therefore, statements such as "in an embodiment", "in some embodiments", "in some other embodiments", and "in other embodiments", that appear at different places in this specification do not necessarily mean referring to a same embodiment, instead, they mean "one or more but not all of the embodiments", unless otherwise specifically emphasized. The terms "include". "contain", "have", and their variants all mean "include but are not limited to", unless otherwise specifically emphasized.

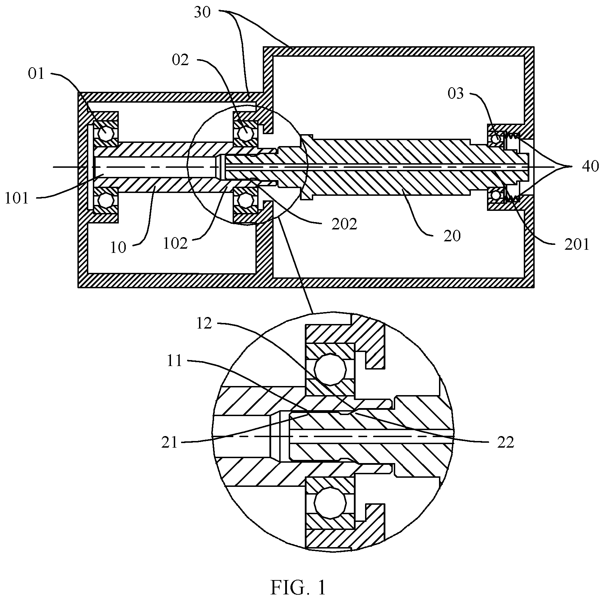

As shown in FIG. 1, an embodiment of this application provides a power assembly, including a first rotating shaft 10 and a second rotating shaft 20 that are coaxially disposed. The first rotating shaft 10 is located in a housing 30 by using two bearings. To be specific, a first end 101 (a left end) is located in the housing 30 by using a first bearing 01, and a second end 102 (a right end) is located in the housing 30 by using a second bearing 02, to prevent the first rotating shaft 10 from generating displacement relative to the housing 30 in axial and radial directions. A third end 201 (a right end) of the second rotating shaft 20 is located in the housing 30 by using a bearing (a third bearing 03), to prevent the second rotating shaft 20 and the third bearing 03 from generating displacement relative to the housing 30 in the radial direction. The third bearing 03 can slide relative to the housing 30 in the axial direction, to allow the second rotating shaft 20 to slide relative to the housing 30 together with the third bearing 03 in the axial direction. As shown in a locally enlarged portion, a first coupling portion 11 is disposed at the second end 102 (the right end) of the first rotating shaft 10, a second coupling portion 21 is disposed at a fourth end 202 (a left end) of the second rotating shaft 20, and the first coupling portion 11 and the second coupling portion 21 are coupled, to implement that the first rotating shaft 10 and the second rotating shaft 20 rotate synchronously. To ensure concentricity between the first coupling portion 11 and the second coupling portion 21, a first concentric surface 12 is further disposed on the first rotating shaft 10, the first concentric surface 12 is disposed oblique to an axis center of the first rotating shaft 10, and a distance between the first concentric surface 12 and the axis center of the first rotating shaft 10 gradually increases in a first axial direction (a direction from left to right in FIG. 1). A second concentric surface 22 is disposed on the second rotating shaft 20, the second concentric surface 22 is disposed oblique to an axis center of the second rotating shaft 20, and a distance between the second concentric surface 22 and the axis center of the second rotating shaft 20 gradually increases in the first axial direction. When the power assembly is in a working state (when the power assembly is not interfered with by external vibration or impact), the first concentric surface 12 abuts against the second concentric surface 22, to prevent the second end 102 of the first rotating shaft 10 and the fourth end 202 of the second rotating shaft 20 from generating displacement relative to each other in the radial direction, thereby improving concentricity between the first coupling portion 11 and the second coupling portion 21. In addition, to ensure that the first concentric surface 12 can tightly abut against the second concentric surface 22, the power assembly further includes a preloaded part 40. The preloaded part 40 is connected to the housing 30 and the third bearing 03 (specifically, the preloaded part 40 may abut against or fixedly connected to the housing 30 and the third bearing 03), and is configured to apply acting force to the second rotating shaft 20 in a second axial direction (opposite to the first axial direction) by using the third bearing 03, so that the third bearing 03 can drive the second rotating shaft 20 to slide in the second axial direction, to enable the first concentric surface 12 to tightly abut against the second concentric surface 22.

In the power assembly provided in this embodiment of this application, because the first rotating shaft 10 and the second rotating shaft 20 are located by using three bearings (which are respectively the first bearing 01, the second bearing 02, and the third bearing 03), a quantity of used bearings can be reduced, to reduce manufacturing costs, an overall weight, and a volume. In addition, the first concentric surface 12 and the second concentric surface 22 cooperate with each other, so that concentricity between coupling structures (the first coupling portion 11 and the second coupling portion 21) of the first rotating shaft 10 and the second rotating shaft 20 can be improved, to prevent the first rotating shaft 10 and the second rotating shaft 20 from generating displacement relative to each other in the radial direction, thereby avoiding the first rotating shaft 10 and the second rotating shaft 20 from generating vibration (or radial runout) during rotation. In addition, this further helps to reduce a process requirement for processing precision and assembly precision of the first coupling portion 11 and the second coupling portion 21.

In specific implementation, the housing 30, the first rotating shaft 10, the first bearing 01, and the second bearing 02 may be in varied fit relationships.

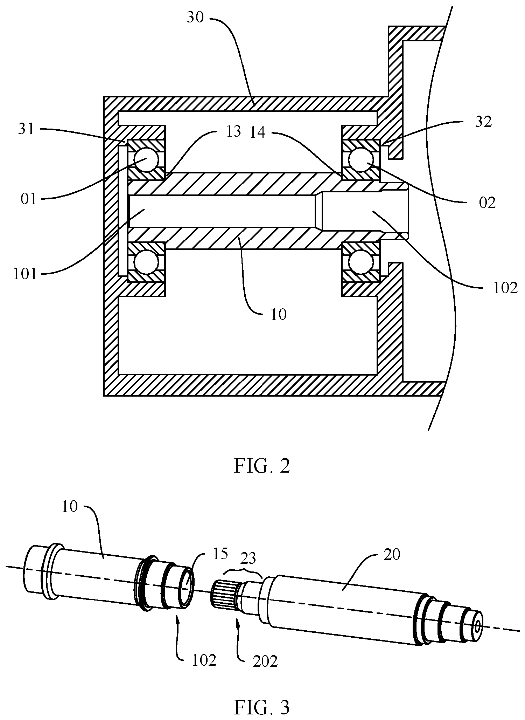

For example, as shown in FIG. 2, in an embodiment provided in this application, the first bearing 01 and the housing 30 may be manufactured and assembled through a clearance fit and the like. The first bearing 01 and the first rotating shaft 10 may be manufactured and assembled through an interference fit and the like. Correspondingly, the second bearing 02 and the housing 30 may be manufactured and assembled through a clearance fit and the like. The second bearing 02 and the second rotating shaft 20 may be manufactured and assembled through an interference fit and the like. A stop shoulder 31 abutting against the first bearing 01 and a stop shoulder 32 abutting against the second bearing 02 are disposed in the housing 30. A shaft shoulder 13 abutting against the first bearing 01 is disposed at the first end 101 (the left end) of the first rotating shaft 10, and a shaft shoulder 14 abutting against the second bearing 02 is disposed at the second end 102 (the right end). Under a combined action of a stop shoulder 31, a stop shoulder 32, the shaft shoulder 13, and the shaft shoulder 14, the first rotating shaft 10 is effectively located in the housing 30 by using the first bearing 01 and the second bearing 02, thereby effectively preventing the first rotating shaft 10 from generating displacement relative to the housing 30 in the radial and axial directions, to improve stability of the first rotating shaft 10 during rotation.

In specific implementation, a specific structure of the first rotating shaft 10, a specific structure of the second rotating shaft 20, and a mutual fit relationship between the first rotating shaft 10 and the second rotating shaft 20 may be varied.

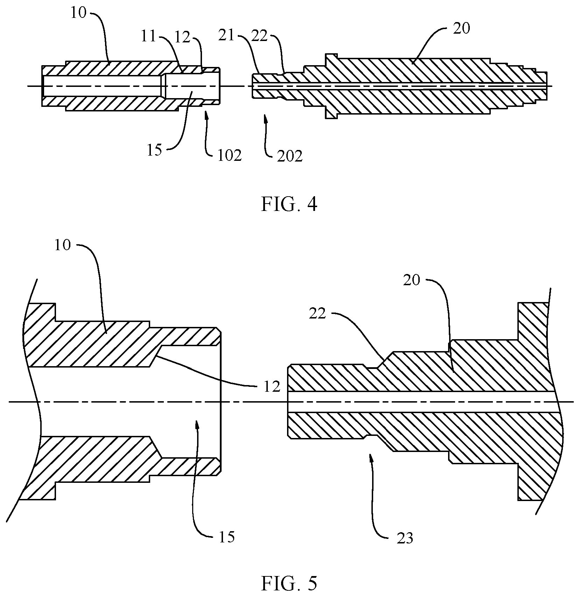

For example, as shown in FIG. 3 and FIG. 4, in an embodiment helpful for understanding the invention but not covered by the claims, the first rotating shaft 10 and the second rotating shaft 20 are coupled by using a spline structure, to be specific, both the first coupling portion 11 and the second coupling portion 21 are spline structures. Specifically, a docking hole 15 is disposed at the second end 102 of the first rotating shaft 10, and a docking post 23 is disposed at the fourth end 202 of the second rotating shaft 20. An internal spline (the first coupling portion 11) is formed on an inner wall of the docking hole 15, and an external spline (the second coupling portion 21) is formed on an outer circumferential surface of the docking post 23. After the docking post 23 is inserted into the docking hole 15, the internal spline is coupled to the external spline, so that the first rotating shaft 10 and the second rotating shaft 20 can rotate synchronously. During manufacturing and assembly, the internal spline and the external spline may be coupled through a clearance fit, to improve assembly convenience. In addition, concentricity between the internal spline and the external spline may be ensured without using structure precision of the internal spline and the external spline. Therefore, this further helps to reduce manufacturing precision of the internal spline and the external spline, thereby reducing manufacturing costs and difficulty. In some other implementations, the first coupling portion 11 and the second coupling portion 21 may be key connection structure in another form, or may be other coupling structures that can transmit torque. This is not specifically limited in this application.

In addition, to ensure concentricity between the first coupling portion 11 and the second coupling portion 21, in an embodiment provided in this application, the first concentric surface 12 is formed on the inner wall of the docking hole 15, and the second concentric surface 22 is formed on the outer circumferential surface of the docking post 23. After the docking post 23 is inserted into the docking hole 15, the first concentric surface 12 abuts against the second concentric surface 22, to prevent the first coupling portion 11 and the second coupling portion 21 from generating displacement relative to each other in the radial direction. Alternatively, it may be understood that, because the right end of the second rotating shaft 20 is located in the housing 30 by using a bearing, when the fourth end 202 is located without a bearing, the second rotating shaft 20 forms a cantilever structure to some extent, and the second rotating shaft 20 is prone to generate radial runout during rotation. Therefore, the fourth end 202 can be effectively located by using the first concentric surface 12 and the second concentric surface 22, to prevent the fourth end 202 from generating a locational change in the axial and radial directions, thereby improving coaxiality between the first rotating shaft 10 and the second rotating shaft 20.

In specific implementation, the first concentric surface 12 and the second concentric surface 22 may have varied structural forms.

For example, as shown in FIG. 5, the first concentric surface 12 may be a conical oblique surface structure using the axis center of the first rotating shaft 10 as a rotation center. Specifically, the first concentric surface 12 may be a conical surface (which may be specifically a conical surface without a tip) formed on the inner wall of the docking hole 15, and a rotation center of the conical surface overlaps with the axis center of the first rotating shaft 10. The second concentric surface 22 may also be a conical oblique surface structure using the axis center of the second rotating shaft 20 as a rotation center. Specifically, the second concentric surface 22 may be a conical surface (which may be specifically a conical surface without a tip) formed on the outer circumference surface of the docking post 23, and a rotation center of the conical surface overlaps with the axis center of the second rotating shaft 20. In specific implementation, degrees of inclination (included angles between the oblique surfaces and the axis centers) of the first concentric surface 12 and the second concentric surface 22 may be the same or different.

In addition, in some other implementations, the first concentric surface 12 may be a conical convex surface structure or a conical concave surface structure. Correspondingly, the second concentric surface 22 may be a conical convex surface structure or a conical concave surface structure.

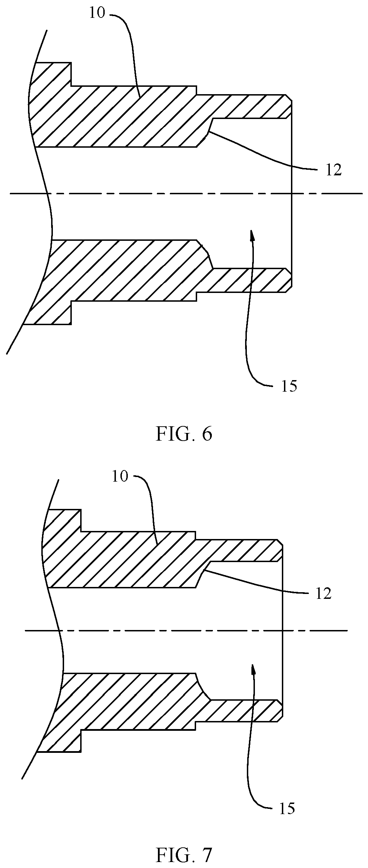

Specifically, as shown in FIG. 6, the first concentric surface 12 may be a conical convex surface structure using the axis center of the first rotating shaft 10 as a rotation center. To be specific, the first concentric surface 12 may be a conical convex surface formed on the inner wall of the docking hole 15, and the rotation center of the conical convex surface overlaps with the axis center of the first rotating shaft 10.

As shown in FIG. 7, the first concentric surface 12 may be a conical concave surface structure using the axis center of the first rotating shaft 10 as a rotation center. To be specific, the first concentric surface 12 may be a conical concave surface formed on the inner wall of the docking hole 15, and the rotation center of the conical concave surface overlaps with the axis center of the first rotating shaft 10.

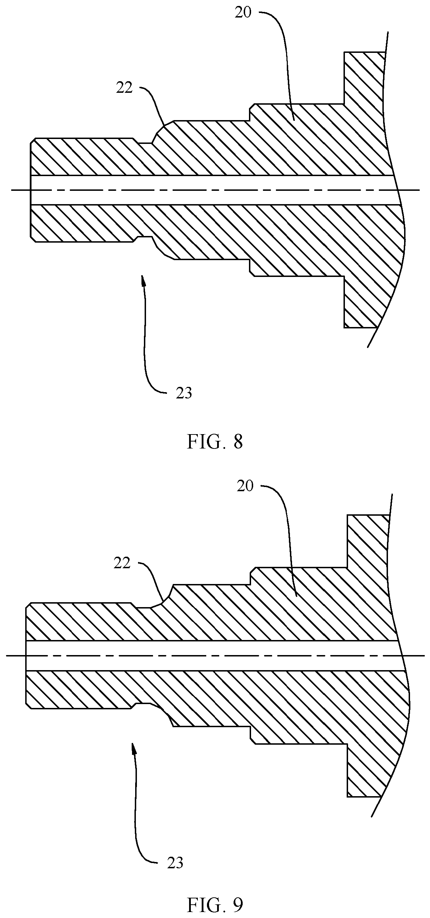

Correspondingly, as shown in FIG. 8, the second concentric surface 22 may also be a conical convex surface structure using the axis center of the second rotating shaft 20 as a rotation center. To be specific, the second concentric surface 22 may be a conical convex surface formed on the outer circumference surface of the docking post 23, and the rotation center of the conical convex surface overlaps with the axis center of the second rotating shaft 20.

As shown in FIG. 9, the second concentric surface 22 may also be a conical concave surface structure using the axis center of the second rotating shaft 20 as a rotation center. To be specific, the second concentric surface 22 may be a conical concave surface formed on the outer circumference surface of the docking post 23, and the rotation center of the conical concave surface overlaps with the axis center of the second rotating shaft 20.

In some other implementations, the first concentric surface 12 and the second concentric surface 22 may be in other structural forms. This is not specifically limited in this application.

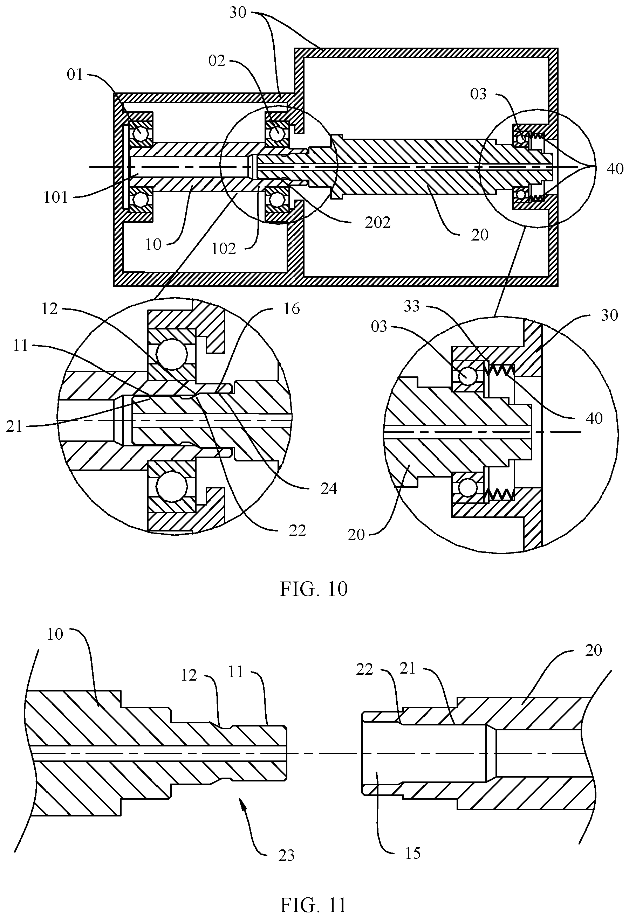

In addition, as shown in FIG. 10, to ensure that the first concentric surface 12 can tightly abut against the second concentric surface 22, the second rotating shaft 20 may slide relative to the first rotating shaft 10 in the axial direction, and the second rotating shaft 20 is driven by using the preloaded part 40 to slide in the second axial direction, so that the first concentric surface 12 tightly abuts against the second concentric surface 22.

Specifically, the second rotating shaft 20 is located in the housing 30 by using the third bearing 03. The third bearing 03 can prevent, to some extent, the second rotating shaft 20 from moving relative to the housing 30 in the radial direction, and can further allow the second rotating shaft 20 to slide relative to the housing 30 in the axial direction. In practical application, the second rotating shaft 20 generates a rotation motion. Therefore, to prevent relative friction between the second rotating shaft 20 and an inner ring of the third bearing 03 from generating, the second rotating shaft 20 and the third bearing 03 may be manufactured and assembled through an interference fit, so that the second rotating shaft 20 and the third bearing 03 keep a relatively fixed state. An outer ring of the third bearing 03 and the housing 30 are manufactured and assembled through a clearance fit, so that the third bearing 03 (or the second rotating shaft 20) can generate relative sliding relative to the housing 30. In addition, to ensure that the second concentric surface 22 tightly abuts against the first concentric surface 12, the preloaded part 40 is connected to the outer ring of the third bearing 03 and the housing 30, and the preloaded part 40 can push against the third bearing 03 to the left (the second axial direction) through elasticity of the preloaded part 40, to enable the third bearing 03 to drive the second rotating shaft 20 to move to the left, so that the first concentric surface 12 tightly abuts against the second concentric surface 22.

In specific implementation, the preloaded part 40 may be a mechanical part that can provide elastic force, such as a coil spring, a wave spring, or a spring plate. This is not specifically limited in this application.

In addition, in practical application, when the power assembly is in an impact state (for example, when the power assembly is subjected to obvious external vibration or impact), the second rotating shaft 20 may move to the right (the first axial direction), thereby compressing the preloaded part 40. To prevent the preloaded part 40 from being over-compressed to be failed, as shown in FIG. 10, a limit surface 33 is disposed on the housing 30. After the second rotating shaft 20 drives the third bearing 03 to move to the right by a specific distance, the limit surface 33 can abut against the outer ring of the third bearing 03, thereby preventing the third bearing 03 and the second rotating shaft 20 from continuing to move to the right, to avoid the preloaded part 40 from being over-compressed to be failed.

In addition, considering that after the second rotating shaft 20 drives the third bearing 03 to move to the right by a specific distance, the first concentric surface 12 and the second concentric surface 22 are separated from each other from a mutually-abutted state. Therefore, to further ensure concentricity between the first coupling portion 11 and the second coupling portion 21, in an embodiment provided in this application, a cylindrical first auxiliary junction surface 16 is formed on the inner wall of the docking hole 15, and a cylindrical second auxiliary junction surface 24 is formed on the outer circumference surface of the docking post 23. When the second rotating shaft 20 slides to the left and the right in the axial direction, the first auxiliary junction surface 16 and the second auxiliary junction surface 24 always maintain a clearance fit, so that when the first concentric surface 12 and the second concentric surface 22 are separated from each other, the clearance fit between the first auxiliary junction surface 16 and the second auxiliary junction surface 24 can still ensure concentricity between the first coupling portion 11 and the second coupling portion 21, thereby improving stability and reliability of the power assembly during running.

In addition, in the foregoing embodiment, the docking hole 15 is disposed at the second end 102 of the first rotating shaft 10, and the docking post 23 is disposed at the fourth end 202 of the second rotating shaft 20, to effectively joint the first rotating shaft 10 and the second rotating shaft 20.

FIG. 11 shows an example, not covered ba the claims, where the docking hole 15 is disposed at the fourth end 202 of the second rotating shaft 20, and the docking post 23 is disposed at the second end 102 of the first rotating shaft 10. Correspondingly, the first coupling portion 11, the first concentric surface 12, and the first auxiliary junction surface 16 may be formed on the outer circumferential surface of the docking post 23. The second coupling portion 21, the second concentric surface 22, and the second auxiliary junction surface 24 may be formed on the inner wall of the docking hole 15. In specific implementation, a structural form in the docking hole 15 may be the same as or similar to that in the foregoing embodiment. Correspondingly, a structural form of the docking post 23 may be the same as or similar to that in the foregoing embodiment. Details are not described herein again.

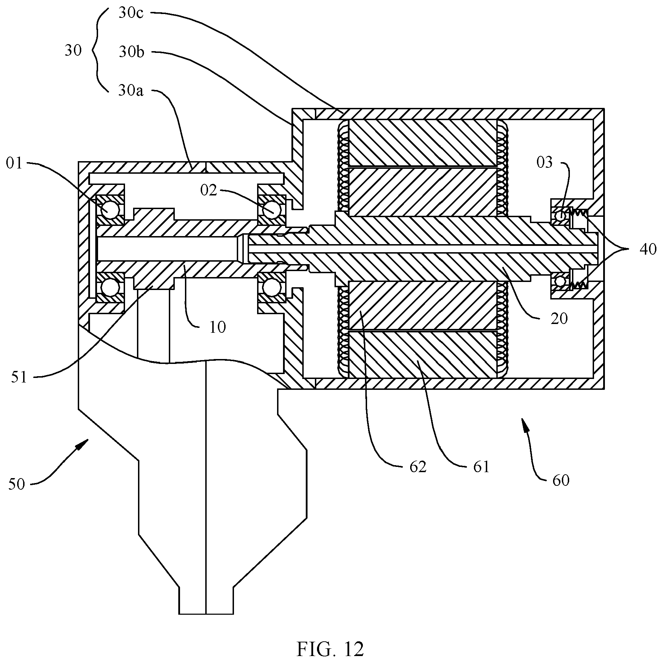

As shown in FIG. 12, in practical application, to improve assembly convenience of the power assembly, the housing 30 may be formed by using three independent housings 30. Specifically, the housings 30 may include a first housing 30a, a second housing 30b, and a third housing 30c. A left end of the second housing 30b may be fixedly connected to the first housing 30a, and a right end of the second housing 30b may be fixedly connected to the third housing 30c. During assembly, the bearing and the rotating shaft may be assembled first. Specifically, the first bearing 01 may be assembled on a left end of the first rotating shaft 10, the second bearing 02 may be assembled on a right end of the first rotating shaft 10, and the third bearing 03 may be assembled on a right end of the second bearing 02. Then, the first bearing 01 is assembled in the first housing 30a, and the second bearing 02 is assembled in the second housing 30b, so that the first rotating shaft 10 is located in the first housing 30a and the second housing 30b by using the first bearing 01 and the second bearing 02. Then, the first housing 30a and the second housing 30b are coupled. In specific implementation, to ensure strength of connection between the first housing 30a and the second housing 30b, the first housing 30a and the second housing 30b may be fixedly connected by using a structure such as a screw. In addition, when the second rotating shaft 20 and the third bearing 03 are assembled in the third housing 30c, first, the preloaded part 40 may be assembled in the third housing 30c. Then, the third bearing 03 is assembled in the third housing 30c, and the docking post 23 of the second rotating shaft 20 is inserted into the docking hole 15 of the first rotating shaft 10. Finally, the second housing 30b and the third housing 30c are fixedly connected, to implement assembly of the power assembly.

In some other implementations, when the power assembly is assembled, an assembly sequence is not only limited to the foregoing assembly sequence. This is not limited in this application.

In addition, in some other implementations. the power assembly may further include a retarder 50 and a motor 60. Specifically, the first rotating shaft 10 may be used as an input shaft of the retarder 50, and an outer circumference surface of the second rotating shaft 20 may be installed with a gear 51 or directly molded into a structure of the gear 51. The first housing 30a may be used as a housing of the retarder 50, and parts such as a component of the gear 51 in the retarder 50 may be disposed in the first housing 30a. The second rotating shaft 20 may be used as a rotor shaft of the motor 60, a rotor 62 may be disposed on the second rotating shaft 20, and a stator 61 may be disposed in the third housing 30c. The second housing 30b may be used as an auxiliary part configured to be fixedly connected to the housing (the first housing 30a) of the retarder 50 and a housing (the third housing 30c) of the motor 60, thereby effectively improving integrity of the power assembly.

In practical application, the power assembly may be installed in devices such as a vehicle, a ship, and an unmanned aerial vehicle. For example, in a vehicle, the power assembly may be coupled to a wheel in the vehicle, thereby driving the wheel to rotate, to implement a driving function of the vehicle. In specific implementation, the vehicle may be a passenger vehicle, a robotic vehicle, and the like. This is not specifically limited in this application.

## Claims

1. A power assembly, comprising:
a housing (30);
a first rotating shaft (10), having a first end (101) and a second end (102), wherein the first end (101) is located in the housing (30) by using a first bearing (1), and the second end (102) is located in the housing (30) by using a second bearing (2); and
a second rotating shaft (20), coaxially disposed with the first rotating shaft (10), wherein the second rotating shaft (20) has a third end (201) and a fourth end (202), the third end (201) is located in the housing (30) by using a third bearing (3), and the third bearing (3) is capable of sliding relative to the housing (30) in an axial direction, wherein
a first coupling portion (11) is disposed at the second end (102) of the first rotating shaft (10), a second coupling portion (21) is disposed at the fourth end (202) of the second rotating shaft (20), and the first coupling portion (11) is coupled to the second coupling portion (21), so that the first rotating shaft (10) and the second rotating shaft rotate synchronously;
a first concentric surface (12) is disposed on the first rotating shaft (10), the first concentric surface (12) is disposed oblique to an axis center of the first rotating shaft (10), and a distance between the first concentric surface (12) and the axis center of the first rotating shaft (10) gradually increases in a first axial direction;
a second concentric surface (22) is disposed on the second rotating shaft (20), the second concentric surface (22) is disposed oblique to an axis center of the second rotating shaft (20), and a distance between the second concentric surface (22) and the axis center of the second rotating shaft (20) gradually increases in the first axial direction; and
when the power assembly is in a working state, the first concentric surface abuts against the second concentric surface (22), to prevent the first rotating shaft (10) and the second rotating shaft (20) from moving relative to each other in a radial direction,
wherein a docking hole (15) is disposed on an end surface of the second end (102) of the first rotating shaft (10), and a docking post (23) is disposed at the fourth end (202) of the second rotating shaft (20);
the first concentric surface (12) is formed on an inner wall of the docking hole (15);
the second concentric surface (22) is formed on an outer circumferential surface of the docking post (23); and
the docking post (23) is inserted into the docking hole (15), and when the power assembly is in a working state, the first concentric surface abuts against the second concentric surface (22),
**characterized in that** a cylindrical first auxiliary junction surface (16) is formed on the inner wall of the docking hole (15), and a cylindrical second auxiliary junction surface (24) is formed on the outer circumferential surface of the docking post (23); and
the first auxiliary junction surface (16) is in a clearance fit with the second auxiliary junction surface (24).

2. The power assembly according to claim 1, further comprising a preloaded part (40), wherein
the preloaded part (40) is connected to the housing (30) and the third bearing (3), and is configured to apply acting force to the second rotating shaft (20) in a second axial direction by using the third bearing (3), wherein the second axial direction is a direction opposite to the first axial direction.

3. The power assembly according to claim 1 or 2, wherein the first concentric surface (12) is a structure of a conical oblique surface, a conical convex surface, or a conical concave surface using the axis center of the first rotating shaft (10) as a rotation center.

4. The power assembly according to any one of claims 1 to 3, wherein the second concentric surface (22) is a structure of a conical oblique surface, a conical convex surface, or a conical concave surface using the axis center of the second rotating shaft (20) as a rotation center.

5. The power assembly according to any one of claims 1 to 4, wherein the housing (30) further comprises a limit surface (33), and the limit surface (33) is disposed towards the third bearing (3), so that when the power assembly is in an impact state, the limit surface (33) is configured to abut against an outer ring of the third bearing (3), to limit movement of the third bearing (3) in the second axial direction.

6. The power assembly according to any one of claims 1 to 5, further comprising a retarder (50) and a motor (60), wherein
the first rotating shaft (10) is an input shaft of the retarder (50), and the second rotating shaft (20) is an output shaft of the motor (60).

7. A vehicle, comprising a wheel and the power assembly according to any one of claims 1 to 6, wherein
the first rotating shaft (10) is connected to the wheel through driving, and is configured to transmit driving torque to the wheel.

## Patentansprüche

1. Antriebsbaugruppe umfassend:
ein Gehäuse (30);
eine erste Drehwelle (10) mit einem ersten Ende (101) und einem zweiten Ende (102), wobei das erste Ende (101) unter Verwendung eines ersten Lagers (1) in dem Gehäuse (30) angeordnet ist und das zweite Ende (102) unter Verwendung eines zweiten Lagers (2) in dem Gehäuse (30) angeordnet ist; und
eine zweite Drehwelle (20), die koaxial mit der ersten Drehwelle (10) angeordnet ist, wobei die zweite Drehwelle (20) ein drittes Ende (201) und ein viertes Ende (202) aufweist, das dritte Ende (201) unter Verwendung eines dritten Lagers (3) in dem Gehäuse (30) angeordnet ist und das dritte Lager (3) fähig ist, relativ zu dem Gehäuse (30) in einer axialen Richtung zu gleiten, wobei
ein erster Kopplungsteil (11) an dem zweiten Ende (102) der ersten Drehwelle (10) angeordnet ist, ein zweiter Kopplungsteil (21) an dem vierten Ende (202) der zweiten Drehwelle (20) angeordnet ist und der erste Kopplungsteil (11) an den zweiten Kopplungsteil (21) gekoppelt ist, so dass sich die erste Drehwelle (10) und die zweite Drehwelle synchron drehen;
eine erste konzentrische Oberfläche (12), die an der ersten Drehwelle (10) angeordnet ist, wobei die erste konzentrische Oberfläche (12) schräg zu einer Achsenmitte der ersten Drehwelle (10) angeordnet ist und ein Abstand zwischen der ersten konzentrischen Oberfläche (12) und der Achsenmitte der ersten Drehwelle (10) in einer ersten axialen Richtung allmählich zunimmt;
eine zweite konzentrische Oberfläche (22), die an der zweiten Drehwelle (20) angeordnet ist, wobei die zweite konzentrische Oberfläche (22) schräg zu einer Achsenmitte der zweiten Drehwelle (20) angeordnet ist und ein Abstand zwischen der zweiten konzentrischen Oberfläche (22) und der Achsenmitte der zweiten Drehwelle (20) in der ersten axialen Richtung allmählich zunimmt; und
wenn sich die Antriebsbaugruppe in einem Betriebszustand befindet, die erste konzentrische Oberfläche an der zweiten konzentrischen Oberfläche (22) anliegt, um zu verhindern, dass sich die erste Drehwelle (10) und die zweite Drehwelle (20) relativ zueinander in einer radialen Richtung bewegen,
wobei ein Kupplungsloch (15) an einer Endfläche des zweiten Endes (102) der ersten Drehwelle (10) angeordnet ist und ein Kupplungsstift (23) an dem vierten Ende (202) der zweiten Drehwelle (20) angeordnet ist;
die erste konzentrische Oberfläche (12) an einer Innenwand des Kupplungslochs (15) gebildet ist;
die zweite konzentrische Oberfläche (22) an einer äußeren Umfangswand des Kupplungsstifts (23) gebildet ist; und
der Kupplungsstift (23) in das Kupplungsloch (15) eingeführt ist, und wenn sich die Antriebsbaugruppe in einem Betriebszustand befindet, die erste konzentrische Oberfläche an der zweiten konzentrischen Oberfläche (22) anliegt,
**dadurch gekennzeichnet, dass** eine zylindrische erste Hilfsverbindungsfläche (16) an der Innenwand des Kupplungslochs (15) gebildet ist und eine zylindrische zweite Hilfsverbindungsfläche (24) an der äußeren Umfangsoberfläche des Kupplungsstifts (23) gebildet ist; und
die erste Hilfsverbindungsfläche (16) in einer Spielpassung mit der zweiten Hilfsverbindungsfläche (24) vorliegt.

2. Antriebsbaugruppe nach Anspruch 1, ferner umfassend einen vorgespannten Teil (40), wobei der vorgespannte Teil (40) mit dem Gehäuse (30) und dem dritten Lager (3) verbunden ist und dafür gestaltet ist, unter Verwendung des dritten Lagers (3) Wirkkraft an die zweite Drehwelle (20) in einer zweiten axialen Richtung anzulegen, wobei die zweite axiale Richtung eine der ersten axialen Richtung entgegengesetzte Richtung ist.

3. Antriebsbaugruppe nach Anspruch 1 oder 2, wobei die erste konzentrische Oberfläche (12) eine Struktur mit einer konischen schrägen Oberfläche, einer konischen konvexen Oberfläche oder einer konischen konkaven Oberfläche unter Verwendung der Achsenmitte der ersten Drehwelle (10) als Drehzentrum ist.

4. Antriebsbaugruppe nach einem der Ansprüche 1 bis 3, wobei die zweite konzentrische Oberfläche (22) eine Struktur mit einer konischen schrägen Oberfläche, einer konischen konvexen Oberfläche oder einer konischen konkaven Oberfläche unter Verwendung der Achsenmitte der zweiten Drehwelle (20) als Drehzentrum ist.

5. Antriebsbaugruppe nach einem der Ansprüche 1 bis 4, wobei das Gehäuse (30) ferner eine Grenzoberfläche (33) umfasst und die Grenzoberfläche (33) in Richtung zu dem dritten Lager (3) angeordnet ist, so dass, wenn sich die Antriebsbaugruppe in einem Stoßzustand befindet, die Grenzoberfläche (33) dafür gestaltet ist, an einem Außenring des dritten Lagers (3) anzuliegen, um Bewegung des dritten Lagers (3) in der zweiten axialen Richtung zu begrenzen.

6. Antriebsbaugruppe nach einem der Ansprüche 1 bis 5, ferner umfassend einen Retarder (50) und einen Motor (60), wobei
die erste Drehwelle (10) eine Eingangswelle des Retarders (50) ist und die zweite Drehwelle (20) eine Ausgangswelle des Motors (60) ist.

7. Fahrzeug, umfassend ein Rad und die Antriebsbaugruppe nach einem der Ansprüche 1 bis 6, wobei
die erste Drehwelle (10) durch Antrieb mit dem Rad verbunden ist und dafür gestaltet ist, Antriebsdrehmoment auf das Rad zu übertragen.

## Revendications

1. Ensemble d'alimentation, comprenant :
un boîtier (30) ;
un premier arbre rotatif (10), présentant une première extrémité (101) et une deuxième extrémité (102), dans lequel la première extrémité (101) est située dans le boîtier (30) à l'aide d'un premier palier (1), et la deuxième extrémité (102) est située dans le boîtier (30) à l'aide d'un deuxième palier (2) ; et
un second arbre rotatif (20), disposé coaxialement avec le premier arbre rotatif (10), dans lequel le second arbre rotatif (20) présente une troisième extrémité (201) et une quatrième extrémité (202), la troisième extrémité (201) est située dans le boîtier (30) à l'aide d'un troisième palier (3), et le troisième palier (3) est capable de glisser par rapport au boîtier (30) dans une direction axiale, dans lequel
une première partie d'accouplement (11) est disposée au niveau de la deuxième extrémité (102) du premier arbre rotatif (10), une seconde partie d'accouplement (21) est disposée au niveau de la quatrième extrémité (202) du second arbre rotatif (20), et
la première partie d'accouplement (11) est accouplée à la seconde partie d'accouplement (21), de sorte que le premier arbre rotatif (10) et le second arbre rotatif tournent de manière synchrone ;
une première surface concentrique (12) est disposée sur le premier arbre rotatif (10), la première surface concentrique (12) est disposée obliquement par rapport à un centre d'axe du premier arbre rotatif (10), et une distance entre la première surface concentrique (12) et le centre d'axe du premier arbre rotatif (10) augmente progressivement dans une première direction axiale ;
une seconde surface concentrique (22) est disposée sur le second arbre rotatif (20), la seconde surface concentrique (22) est disposée obliquement par rapport à un centre d'axe du second arbre rotatif (20), et une distance entre la seconde surface concentrique (22) et le centre d'axe du second arbre rotatif (20) augmente progressivement dans la première direction axiale ; et
lorsque l'ensemble d'alimentation est dans un état actif, la première surface concentrique est en butée contre la seconde surface concentrique (22), afin d'empêcher le premier arbre rotatif (10) et le second arbre rotatif (20) de se déplacer l'un par rapport à l'autre dans une direction radiale,
dans lequel un trou d'arrimage (15) est disposé sur une surface d'extrémité de la deuxième extrémité (102) du premier arbre rotatif (10), et un montant d'arrimage (23) est disposé au niveau de la quatrième extrémité (202) du second arbre rotatif (20) ;
la première surface concentrique (12) est formée sur une paroi interne du trou d'arrimage (15) ;
la seconde surface concentrique (22) est formée sur une surface circonférentielle externe du montant d'arrimage (23) ; et
le montant d'arrimage (23) est inséré dans le trou d'arrimage (15), et lorsque l'ensemble d'alimentation est dans un état actif, la première surface concentrique vient en butée contre la seconde surface concentrique (22),
**caractérisé en ce qu'**une première surface de jonction auxiliaire cylindrique (16) est formée sur la paroi interne du trou d'arrimage (15), et une seconde surface de jonction auxiliaire cylindrique (24) est formée sur la surface circonférentielle externe du montant d'arrimage (23) ; et
la première surface de jonction auxiliaire (16) est en ajustement avec jeu avec la seconde surface de jonction auxiliaire (24).

2. Ensemble d'alimentation selon la revendication 1, comprenant en outre une partie préchargée (40), dans lequel
la partie préchargée (40) est reliée au boîtier (30) et au troisième palier (3), et est configurée pour appliquer une force d'action au second arbre rotatif (20) dans une seconde direction axiale à l'aide du troisième palier (3), dans lequel la seconde direction axiale est une direction opposée à la première direction axiale.

3. Ensemble d'alimentation selon la revendication 1 ou 2, dans lequel la première surface concentrique (12) est une structure d'une surface oblique conique, d'une surface convexe conique, ou d'une surface concave conique utilisant le centre d'axe du premier arbre rotatif (10) comme centre de rotation.

4. Ensemble d'alimentation selon l'une quelconque des revendications 1 à 3, dans lequel la seconde surface concentrique (22) est une structure d'une surface oblique conique, d'une surface convexe conique, ou d'une surface concave conique utilisant le centre d'axe du second arbre rotatif (20) comme centre de rotation.

5. Ensemble d'alimentation selon l'une quelconque des revendications 1 à 4, dans lequel le boîtier (30) comprend en outre une surface de limite (33), et la surface de limite (33) est disposée vers le troisième palier (3), de sorte que, lorsque l'ensemble d'alimentation est dans un état d'impact, la surface de limite (33) soit configurée pour venir en butée contre une bague externe du troisième palier (3) pour limiter le mouvement du troisième palier (3) dans la seconde direction axiale.

6. Ensemble d'alimentation selon l'une quelconque des revendications 1 à 5, comprenant en outre un ralentisseur (50) et un moteur (60), dans lequel le premier arbre rotatif (10) est un arbre d'entrée du ralentisseur (50), et le second arbre rotatif (20) est un arbre de sortie du moteur (60).

7. Véhicule, comprenant une roue et l'ensemble d'alimentation selon l'une quelconque des revendications 1 à 6, dans lequel
le premier arbre rotatif (10) est relié à la roue par l'entraînement, et est configuré pour transmettre un couple d'entraînement à la roue.
